# EUROPEAN PATENT APPLICATION

(11) **EP 4 660 264 A1**
(43) Date of publication of application: **10.12.2025**
(21) Application number: 24749886.8
(22) Date of filing: 11.01.2024
(51) Int. Cl.: C09D 175/04, C09D 175/06, C09D 175/08

(54) **COATING COMPOSITION, METHOD FOR PRODUCING SAME, AND ARTICLE COATED THEREWITH**

(30) Priority: 30.01.2023 JP 2023011468
(71) Applicant: SHIN-ETSU CHEMICAL CO., LTD., Tokyo 1000005 (JP)
(72) Inventor: OKUNO Hirohito, Annaka-shi, Gunma 379-0224 (JP); ASO Fumihiro, Annaka-shi, Gunma 379-0224 (JP)
(74) Representative: Mewburn Ellis LLP
(86) International application number: PCT/JP2024/000368
(87) International publication number: WO 2024/161930

(57) **Abstract**

Provided is a coating composition that contains
(A) a polyol such as an acrylic polyol,
(B) a compound having two or more isocyanate groups per molecule, and
(C) a hydroxyl group-containing organopolysiloxane represented by formula (I)

(SiO_{4/2})ₐ(R¹SiO_{3/2})_{b}(R¹₂SiO_{2/2})_{c}(R¹₃SiO_{1/2})_{d}(R²O_{1/2})ₑ(R³O_{1/2})_{f} (I)

(R¹ is a monovalent saturated hydrocarbon group, etc., R² is a methyl group, etc., R³ is a group represented by formula (II), a, b, c, and d are numbers that satisfy 0 ≤ a < 1, 0 < b ≤ 1, 0 ≤ c ≤ 0.5, 0 ≤ d < 1, and a+b+c+d = 1, and e and f are numbers that satisfy 0 ≤ e ≤ 1, 0 < f < 4, and 0 < e + f < 4.) 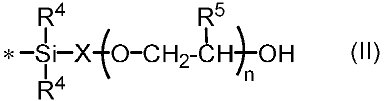 (R⁴ is a monovalent saturated hydrocarbon group, etc., R⁵ is a hydrogen atom, etc., X is a divalent hydrocarbon group, n is a number of 0-400, and * represents a bond with an oxygen atom.),
the ratio of the number of isocyanate groups in component (B) to the sum of the number of hydroxyl groups in components (A) and (C) being 0.8-1.4.

## Description

### TECHNICAL FIELD

The present invention relates to a coating composition, a method for producing the same, and a coated article. More specifically, the invention relates to a coating composition which includes an organic resin and an organopolysiloxane, a method for preparing the coating composition, and a coated article having a cured film formed of the coating composition.

### BACKGROUND ART

Alkoxysilyl group-containing organopolysiloxanes are widely used in paints and coatings. In general, by formulating an organopolysiloxane having alkoxy groups on the ends with a curing catalyst and applying external energy such as heat energy, the terminal alkoxy groups mutually react, forming a strong siloxane network. As a result, the film obtained has excellent heat resistance and weather resistance. Such films are therefore applied to a broad range of objects ranging from outdoor structures to automotive parts and electronic components.

Although organopolysiloxane coatings have the above advantages, their rate of cure is slow and the resulting films have an inferior crack resistance and flex resistance.

In order to ameliorate these drawbacks, approaches that use as coatings a composition in which an organopolysiloxane and an organic resin such as an alkyd resin, polyester resin, acrylic resin or epoxy resin are mixed together have hitherto been known. Patent Document 1 discloses, as such a composition, a coating composition which includes, for example, a silyl group-containing vinyl polymer, a silanol group-containing organopolysiloxane and an alkoxy group-containing organopolysiloxane.

However, although this composition has improved curability and crack resistance, the properties such as chemical resistance, stain resistance and weather resistance that are features of organopolysiloxane resin films end up being diminished.

Patent Documents 2 to 5 disclose techniques that react an organic resin with an organosilane or an organopolysiloxane to form a composite. However, because these techniques require synthesis equipment for making a composite of the resin, there are drawbacks in terms of their general utility.

Hence, there exists a desire for a simple technique that elicits the properties of both the organopolysiloxane and the organic resin.

### PRIOR ART DOCUMENTS

### PATENT DOCUMENTS

Patent Document 1: JP-A H03-197548
Patent Document 2: JP-A H11-116683
Patent Document 3: JP-A H05-345877
Patent Document 4: JP 5384939
Patent Document 5: JP 6113456

### SUMMARY OF INVENTION

### TECHNICAL PROBLEM

The present invention was arrived at in light of the above circumstances. An object of the invention is to provide a coating composition which includes an organic resin and an organopolysiloxane, can be easily prepared, and provides a cured film of excellent chemical resistance, stain resistance and weather resistance.

### SOLUTION TO PROBLEM

The inventors have conducted intensive investigations aimed at achieving the above object. As a result, they have discovered that a coating composition in which a polyol, a polyisocyanate and a given hydroxyl group-containing organopolysiloxane are mixed together in given proportions is curable at room temperature, and that the film obtained from this composition has a satisfactory chemical resistance, stain resistance and weather resistance. These discoveries ultimately led to the present invention.

Accordingly, the invention provides:
1. A coating composition which includes
   (A) one, two or more polyols selected from the group consisting of acrylic polyols, polyester polyols and polyether polyols,
   (B) a compound having two or more isocyanate groups per molecule, and
   (C) from 5 to 500 parts by weight of a hydroxyl group-containing organopolysiloxane of formula (I) below per 100 parts by weight of component (A)

   [Chem. 1] (SiO_{4/2})ₐ(R¹SiO_{3/2})_{b}(R¹₂SiO_{2/2})_{c}(R¹₃SiO_{1/2})_{d}(R²O_{1/2})ₑ(R³O_{1/2})_{f} (I)

   (wherein each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; R2 is a hydrogen atom, methyl group, ethyl group, n-propyl group or isopropyl group; R³ is a group of formula (II) below 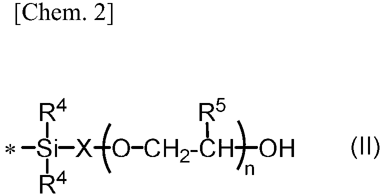 (wherein each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; each R⁵ is independently a hydrogen atom or a monovalent saturated hydrocarbon group of 1 to 8 carbon atoms; X is a divalent hydrocarbon group of 2 to 8 carbon atoms; n is a number from 0 to 400; and * represents a bond with an oxygen atom); a, b, c and d are numbers which respectively satisfy the conditions 0 ≤ a < 1, 0 < b ≤ 1, 0 ≤ c ≤ 0.5, 0 ≤ d < 1 and a+b+c+d = 1; and e and f are numbers which respectively satisfy the conditions 0 ≤ e ≤ 1, 0 < f < 4 and 0 < e+f < 4), wherein the ratio (NCO_{(B)}/OH_{(A+C)}) of the number of isocyanate groups in component (B) to the sum of the number of hydroxyl groups in component (A) and the number of hydroxyl groups in component (C) is from 0.8 to 1.4;
2. The coating composition of 1 above, wherein component (A) is an acrylic polyol, a polyester polyol, or both of these;
3. The coating composition of 1 or 2 above, wherein component (B) is a polyisocyanate which has two or more isocyanate groups per molecule and has no silicon atoms;
4. The coating composition of any of 1 to 3 above, wherein at least one occurrence of R¹ in formula (I) is an aryl group having from 6 to 18 carbon atoms;
5. The coating composition of any of 1 to 4 above, wherein each R¹ in formula (I) is independently a methyl group or a phenyl group;
6. The coating composition of any of 1 to 5 above, wherein R² in formula (I) is a methyl group;
7. The coating composition of any of 1 to 6 above, wherein b in formula (I) is a number which satisfies the condition 0.5 ≤ b ≤ 1;
8. The coating composition of any of 1 to 7 above, wherein a and d in formula (I) are 0;
9. The coating composition of any of 1 to 8 above, wherein R⁴ in formula (II) is a methyl group, R⁵ is a hydrogen atom, X is an alkylene group of 3 carbon atoms and n is 1;
10. The coating composition of any of 1 to 9 above, wherein component (C) has a polystyrene-equivalent weight-average molecular weight (Mw) in gel permeation chromatography which is from 1,000 to 500,000;
11. The coating composition of any of 1 to 10 above, further including (D) a curing catalyst;
12. A method for preparing the coating composition of any of 1 to 11 above, which method includes the step of mixing together components (A) to (C) at between 10°C and 40°C;
13. A cured film of the coating composition of any of 1 to 11 above; and
14. A coated article having a substrate and the cured film of 13 above formed, either directly or over one or more other layer, on at least one surface of the substrate.

### ADVANTAGEOUS EFFECTS OF INVENTION

The coating composition of the invention can be prepared by simply mixing together a polyol, a polyisocyanate and a hydroxyl group-containing organosiloxane and gives a cured film of excellent chemical resistance, stain resistance and weather resistance, thus making it suitable for the manufacture of various coated articles.

### DESCRIPTION OF EMBODIMENTS

The invention is described more fully below.

The coating composition of the invention includes components (A) to (C) below.
(A) a polyol,
(B) a polyisocyanate, and
(C) a hydroxyl group-containing organopolysiloxane having a structure represented by average formula (I) below.
   [Chem. 3]

   (SiO_{4/2})ₐ(R¹SiO_{3/2})_{b}(R¹₂SiO_{2/2})_{c}(R¹₃SiO_{1/2})_{d}(R²O_{1/2})ₑ(R³O_{1/2})_{f} (I)

### (1) Component (A): Polyol

The polyol serving as component (A) is an ingredient which has two or more reactive hydroxyl groups per molecule and which, in the presence or absence of a curing catalyst, reacts with component (B) having isocyanate groups to form a crosslinked structure.

The polyol is exemplified by acrylic polyols which are (co)polymers of a hydroxyl group-containing (meth)acrylic monomer and another, optional, (meth)acrylic monomer, polyester polyols which are condensation polymers of a polybasic acid with a polyhydric alcohol (including alkyd polyols which are condensation polymers of a polybasic acid and an aliphatic acid with a polyhydric alcohol), and polyether polyols which are addition polymers of a polyhydric alcohol with an alkylene oxide.

Of these, acrylic polyols and polyester polyols are preferred. Acrylic polyols are especially preferred because the film obtained has an excellent transparency and gloss.

In this Specification, "meth(acrylic) monomer" has a meaning that encompasses both acrylic monomers and methacrylic monomers.

Specific examples of the hydroxyl group-containing (meth)acrylic monomer as a starting monomer for the acrylic polyol include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 3-chloro-2-hydroxypropyl (meth)acrylate, di-2-hydroxyethyl fumarate, mono-2-hydroxyethyl monobutyl fumarate, polyethylene glycol mono(meth)acrylate, polypropylene glycol mono(meth)acrylate, hydroxyalkyl esters of various α,β-ethylenically unsaturated carboxylic acids such as Placcel FM or Placcel FA (caprolactone addition monomers from Daicel Chemical Industries, Ltd.), and adducts of these with ε-caprolactam.

Of these, 2-hydroxyethyl (meth)acrylate reacts easily and is preferred.

The other (meth)acrylic monomer which is copolymerizable with a hydroxyl group-containing (meth)acrylic monomers is not particularly limited; the use of a known monomer is possible. Vinyl monomers are also copolymerizable.

Examples include alkyl (meth)acrylates having an alkyl group of 1 to 22 carbon atoms, such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate and lauryl (meth)acrylate; aralkyl (meth)acrylates such as benzyl (meth)acrylate and 2-phenylethyl (meth)acrylate; cycloalkyl (meth)acrylates such as cyclohexyl (meth)acrylate and isobornyl (meth)acrylate; ω-alkoxyalkyl (meth)acrylates such as 2-methoxyethyl (meth)acrylate and 4-methoxybutyl (meth)acrylate; aromatic vinyl monomers such as styrene, p-tert-butylstyrene, α-methylstyrene and vinyltoluene; vinyl esters of carboxylic acids, such as vinyl acetate, vinyl propionate, vinyl pivalate and vinyl benzoate; alkyl esters of crotonic acid, such as methyl crotonate and ethyl crotonate; dialkyl esters of unsaturated dibasic acids, such as dimethyl malate, di-n-butyl malate, dimethyl fumarate and dimethyl itaconate; α-olefins such as ethylene and propylene; fluoroolefins such as vinylidene fluoride, tetrafluoroethylene, hexafluoropropylene and chlorotrifluoroethylene; alkyl vinyl ethers such as ethyl vinyl ether and n-butyl vinyl ether; cycloalkyl vinyl ethers such as cyclopentyl vinyl ether and cyclohexyl vinyl ether; and tertiary amide group-containing monomers such as N,N-dimethyl (meth)acrylamide, N-(meth)acryloyl morpholine, N-(meth)acryloyl pyrrolidine and N-vinylpyrrolidone.

The polymerization method, solvent and polymerization initiator when copolymerizing these monomers are not particularly limited. For example, polymerization may be carried out by various polymerization methods, such as bulk radical polymerization, solution radical polymerization or nonaqueous dispersion radical polymerization; using where necessary a solvent, examples of which include hydrocarbons such as hexane, octane, toluene and xylene, ketones such as methyl ethyl ketone, esters such as ethyl acetate, and alcohols such as isopropyl alcohol; and using an initiator such as 2,2'-azobis(isobutyronitrile), 2,2'-azobis(2,4-dimethylvaleronitrile), 2,2'-azobis(2-methylbutyronitrile), tert-butyl peroxypivalate, tert-butyl peroxybenzoate, tert-butyl peroxy-2-ethyl hexanoate, di-tert-butyl peroxide, cumene hydroperoxide or diisopropyl peroxycarbonate.

The molecular weight of the polyol of component (A) is not particularly limited. However, from the standpoint of the curability, weather resistance and coating properties, the polystyrene-equivalent weight-average molecular weight (Mw) by gel permeation chromatography is preferably from 1,000 to 100,000, and more preferably from 2,000 to 80,000.

The amount of hydroxyl groups included in component (A) is not particularly limited, although the hydroxyl value is preferably from 10 to 200 mg KOH/g, and more preferably from 20 to 180 mg KOH/g. In this invention, the hydroxyl value is the measured value obtained according to JIS K 1557-1: 2007.

Component (A) may be of one type used alone, or two or more types may be used in combination.

A commercial product may be used as component (A). Examples include Acrydic A-801P (an acrylic polyol), Burnock D-220 (a polyester polyol) (both from DIC Corporation), and Duranate TPA-100 (from Asahi Kasei Corporation).

### (2) Component (B): Polyisocyanate

Component (B) is an isocyanate compound having two or more isocyanate groups per molecule.

Polyisocyanate compounds that can be used include known compounds such as aromatic, aliphatic, aromatic-aliphatic and alicyclic polyisocyanates, and organosilicon compounds having isocyanate groups. However, a polyisocyanate without silicon atoms is preferred. From the standpoint of prolonged outdoor use, aliphatic polyisocyanates obtained from aliphatic diisocyanates as the chief starting material are suitable.

Examples of the aliphatic diisocyanate include tetramethylene diisocyanate, 1,5-pentamethylene diisocyanate, 1,6-hexamethylene diisocyanate (abbreviated below as "HDI"), 2,2,4- (or 2,4,4-) trimethyl-1,6-hexamethylene diisocyanate, lysine isocyanate, isophorone diisocyanate, hydrogenated xylene diisocyanate, hydrogenated diphenylmethane diisocyanate, 1,4-diisocyanate cyclohexane, 1,3-bis(diisocyanatomethyl)cyclohexane and 4,4'-dicyclohexylmethane diisocyanate.

Of these, from the standpoint of the crack resistance and cost of the resulting film, HDI is especially preferred.

Examples of aliphatic polyisocyanates that can be obtained from aliphatic diisocyanates include allophanate-type polyisocyanates, biuret-type polyisocyanates, adduct-type polyisocyanates and isocyanurate-type polyisocyanates. All of these may be suitably used.

It is also possible to use as the above polyisocyanate a so-called blocked polyisocyanate compound that has been blocked with any of various blocking agents.

Blocking agents that may be used include alcohols such as methanol, ethanol and lactic acid esters; phenolic hydroxyl group-containing compounds such as phenol and salicylic acid esters; amides such as ε-caprolactam and 2-pyrrolidone; oximes such as acetone oxime and methyl ethyl ketoxime; and active methylene compounds such as methyl acetoacetate, ethyl acetoacetate and acetyl acetone.

The amount of isocyanate groups included in component (B) is not particularly limited; expressed as the isocyanate content, this is preferably from 5 to 50 wt%, and more preferably from 10 to 40 wt%. In this invention, the isocyanate content is the value according to JIS K1603-1: 2007.

A commercial product may be used as Component (B). Examples include DN-901S and DN-990S (both from DIC Corporation).

The amount of component (B) included is an amount such that the ratio (NCO_{(B)}/OH_{(A+C)}) of the number of isocyanate groups in component (B) to the sum of the number of hydroxyl groups in component (A) and the number of hydroxyl groups in subsequently described component (C) is from 0.8 to 1.4, and preferably an amount such that this ratio is from 0.9 to 1.2. At less than 0.8, the chemical resistance and weather resistance of the resulting cured film are poor; at more than 1.4, the stain resistance and weather resistance of the cured film are poor.

Component (B) may be of one type used alone, or two or more may be used in combination.

### (3) Component (C): Hydroxyl Group-Containing Organopolysiloxane

Component (C) is a hydroxyl group-containing organopolysiloxane of formula (I) below. One having a plurality of hydroxyl groups per molecule is preferred.

[Chem. 4]

(SiO_{4/2})ₐ(R¹SiO_{3/2})_{b}(R¹₂SiO_{2/2})_{c}(R¹₃SiO_{1/2})_{d}(R²O_{1/2})ₑ(R³O_{1/2})_{f} (I)

In formula (I), each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom.

The monovalent saturated hydrocarbon group of 1 to 12 carbon atoms of R¹ may be linear, branched or cyclic. Specific examples include linear or branched alkyl groups such as methyl, ethyl, n-propyl, isopropyl, n-butyl, isobutyl, tert-butyl, neopentyl, n-hexyl, n-heptyl and n-octyl groups; and cycloalkyl groups such as cyclopentyl and cyclohexyl groups. Alkyl groups of 1 to 6 carbon atoms are preferred, alkyl groups of 1 to 3 carbon atoms are more preferred, and methyl and ethyl groups are even more preferred.

The aralkyl group of 7 to 20 carbon atoms is preferably one having from 7 to 10 carbon atoms. Specific examples include benzyl and phenylethyl groups.

The aryl group of 6 to 18 carbon atoms is preferably one having from 6 to 10 carbon atoms. Specific examples include unsubstituted aryl groups such as phenyl and naphthyl groups; and alkylaryl groups such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl groups. A phenyl group is preferred.

Of these, methyl and phenyl groups are preferred as R¹.

Some or all of the hydrogen atoms on the above monovalent saturated hydrocarbon groups, aralkyl groups and aryl groups may be substituted with halogen atoms (fluorine, chlorine, bromine or iodine atoms). Specific examples of these substituted groups include chloromethyl, chloropropyl, bromoethyl, trifluoropropyl, chlorophenyl and bromophenyl groups. Also, it is preferable for at least one occurrence of R¹ to be a halogen-substituted, or unsubstituted, aryl group of 6 to 18 carbon atoms.

R² is a hydrogen atom, methyl, ethyl, n-propyl or isopropyl group; preferably a methyl, ethyl, n-propyl or isopropyl group; more preferably a methyl or ethyl group; and even more preferably a methyl group.

R³ is a group of formula (II) below.

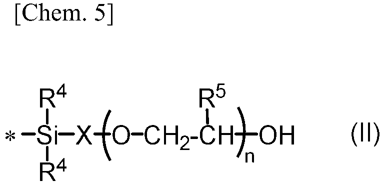

In formula (II), each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom. Specific examples of these monovalent saturated hydrocarbon groups, aralkyl groups and aryl groups include the same as those mentioned as examples of the respective groups in connection with R¹ above. Of these, R⁴ is preferably a methyl group, ethyl group or phenyl group; and is more preferably a methyl group.

Some or all of the hydrogen atoms on the monovalent saturated hydrocarbon groups, aralkyl groups and aryl groups of R⁴ may be substituted with halogen atoms. Specific examples include the same groups as those mentioned in connection with R¹.

Each R⁵ is independently a hydrogen atom or a monovalent saturated hydrocarbon group of 1 to 8 carbon atoms. The monovalent saturated hydrocarbon group of R⁵ may be linear, branched or cyclic. Specific examples include the same as those among the groups mentioned in connection with R¹ which have 1 to 8 carbon atoms. Of these, R⁵ is preferably a hydrogen atom or an alkyl group of 1 to 3 carbon atoms; more preferably a hydrogen atom, methyl group or ethyl group; and even more preferably a hydrogen atom.

X is a divalent hydrocarbon group of 2 to 8 carbon atoms, and is preferably a linear or branched divalent aliphatic hydrocarbon group. Specific examples include alkylene groups such as ethylene, trimethylene, propylene, tetramethylene, hexamethylene and octamethylene groups. Of these, alkylene groups of 2 or 3 carbon atoms are preferred, alkylene groups of 3 carbon atoms are more preferred, and the trimethylene group is even more preferred.

The subscript 'n' is a number from 0 to 400. From the standpoint of solubility, a number from 0 to 100 is preferred, 0 or 1 is more preferred, and 1 is even more preferred.

The group of above formula (II) is preferably one in which R⁴ is a methyl group, R⁵ is a hydrogen atom, X is an alkylene group of 3 carbon atoms, and n is 1.

In formula (I), the subscript 'a' is a number which satisfies the condition 0 ≤ a < 1. From the standpoint of the crack suppressing effect, a number which satisfies the condition 0 ≤ a ≤ 0.3 is preferred, and a = 0 is more preferred.

The subscript 'b' is a number which satisfies the condition 0 < b ≤ 1. From the standpoint of the mar resistance of the resulting cured product, a number which satisfies the condition 0.5 ≤ b ≤ 1 is preferred.

The subscript 'c' is a number which satisfies the condition 0 ≤ c ≤ 0.5. From the standpoint of the curability of the composition and the hardness of the resulting cured product, a number which satisfies the condition 0 ≤ c ≤ 0.4 is preferred; a number which satisfies the condition 0 ≤ c ≤ 0.3 is more preferred.

The subscript 'd' is a number which satisfies the condition 0 ≤ d < 1. From the standpoint of the curability of the composition and the hardness of the resulting cured product, a number which satisfies the condition 0 ≤ d ≤ 0.2 is preferred; d = 0 is more preferred.

Also, a, b, c and d are numbers which satisfy the condition a+b+c+d = 1.

The subscript 'e' is a number which satisfies the condition 0 ≤ e ≤ 1. From the standpoint of suppressing condensation reactions by condensable functional groups, a number which satisfies the condition 0 ≤ e ≤ 0.8 is preferred.

The subscript 'f' is a number which satisfies the condition 0 < f < 4. From the standpoint of the crosslink density of the cured product, a number which satisfies the condition 0.2 < f ≤ 2 is preferred, and a number which satisfies the condition 0.4 < f ≤ 1.1 is more preferred.

Also, e and f are numbers which satisfy the condition 0 < e+f < 4, and are preferably numbers which satisfy the condition 0.2 < e+f ≤ 2.8.

The hydroxyl group-containing organopolysiloxane serving as component (C) is preferably one for which, in above formula (I), R¹ is a methyl group or phenyl group, R² is a methyl group, a is 0, b is a number which satisfies the condition 0.5 ≤ b ≤ 1, c is a number which satisfies the condition 0 ≤ c ≤ 0.5, d is 0, a+b+c+d = 1, e is a number which satisfies the condition 0 ≤ e ≤ 0.8, and f is a number which satisfies the condition 0.2 < f ≤ 2; and for which, in above formula (II), R⁴ is a methyl group, R⁵ is a hydrogen atom, X is an alkylene group of 3 carbon atoms, and n is 1.

The method for preparing component (C) is not particularly limited, For example, component (C) may be obtained by a method of preparation that includes the following Steps (α) and (β).
Step (α): Obtaining a SiH group-containing organopolysiloxane by a hydrolytic condensation reaction between an organopolysiloxane of formula (I') below and a silane compound of formula (III) below or by an equilibration reaction between an organopolysiloxane of formula (I') below and a disiloxane compound of formula (IV) below using an acid catalyst
   [Chem. 6]

   (SiO_{4/2})ₐ(R¹SiO_{3/2})_{b}(R¹₂SiO_{2/2})_{c}(R¹₃SiO_{1/2})_{d}(R²O_{1/2})_{g} (I')
   (wherein R¹, R², a, b, c and d are as defined above, and g is a number which satisfies the condition 0 < g < 4) 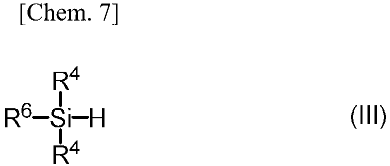 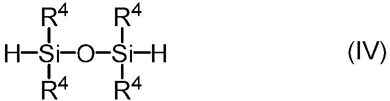
   (wherein R⁴ is as defined above; and R⁶ is a halogen atom, a hydroxyl group or an alkoxy group of 1 to 4 carbon atoms).
Step (β): Effecting a hydrosilylation reaction between the SiH group-containing organopolysiloxane obtained in Step (α) and a compound of formula (V) below 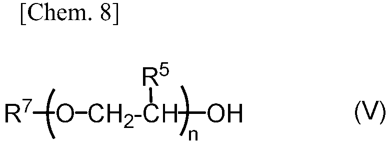 (wherein R⁵ and n are as defined above, and R⁷ is a monovalent aliphatic unsaturated hydrocarbon group of 2 to 8 carbon atoms).

### <Step (α)>

Step (α) is the step of obtaining a SiH group-containing organopolysiloxane by a hydrolytic condensation reaction between an organopolysiloxane of above formula (I') and a silane compound of above formula (III) or by an equilibration reaction between an organopolysiloxane of above formula (I') and a disiloxane compound of above formula (IV) using an acid catalyst.

In formula (I'), g is a number which satisfies the condition 0 < g < 4, and is preferably a number which satisfies the condition 0.2 < g ≤ 2.8.

The organopolysiloxane of formula (I') is preferably one in which R¹ is a methyl group or a phenyl group, R² is a methyl group, a is 0, b is a number which satisfies the condition 0.5 ≤ b ≤ 1, c is a number which satisfies the condition 0 ≤ c ≤ 0.5, d is 0, a+b+c+d = 1, and g is a number which satisfies the condition 0.2 < g ≤ 2.8.

The organopolysiloxane of formula (I') can be prepared in accordance with a common organopolysiloxane preparation method. For example, it can be obtained by hydrolytically condensing a silane compound having hydrolyzable groups.

The hydrolyzable group-containing silane compound is not particularly limited, provided that it has from 1 to 4 chloro groups or alkoxy groups which are hydrolyzable groups on silicon atoms and that it is a silane compound having organic substituents which satisfy the above conditions.

Specific examples include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane and partial hydrolyzates of these. In terms of the workability, ease of distilling off by-products and availability of the starting materials, methoxysilane and ethoxysilane are preferred.

The above silane compound may be of one type used alone or two or more may be used in combination.

A hydrolysis catalyst may be used when carrying out hydrolysis. The hydrolysis catalyst used may be a known catalyst, and the aqueous solution thereof preferably is one that exhibits an acidity of pH 2 to 7 (acidic catalyst). Acidic hydrogen halides, sulfonic acids, carboxylic acids, acidic or weakly acidic inorganic salts and solid acids such as ion-exchange resins are especially preferred.

Specific examples of acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid, and cationic exchange resins having sulfonic acid or carboxylic acid groups on the surface.

The amount of hydrolysis catalyst used is not particularly limited. However, to enable the reaction to proceed rapidly, and also taking into account the ease of removing the catalyst following the reaction, from 0.0002 to 0.5 mole per mole of hydrolyzable silane is preferred.

The weight ratio between the hydrolyzable group-containing silane compound and the water required for the hydrolytic condensation reaction is not particularly limited. However, to prevent catalyst deactivation and enable the reaction to fully proceed, and also taking into account the ease of removing water following the reaction, a ratio of from 0.1 to 10 moles of water per mole of hydrolyzable silane is preferred.

Although the reaction temperature during hydrolytic condensation is not particularly limited, to improve the rate of conversion and moreover to prevent the decomposition of organic functional groups, the temperature is preferably between -10°C and 150°C. The reaction time, although not particularly limited, is preferably from 0.5 to 6 hours.

An organic solvent may be used during hydrolytic condensation. Specific examples of organic solvents that may be used include methanol, ethanol, propanol, acetone, methyl ethyl ketone, methyl isobutyl ketone, tetrahydrofuran, toluene and xylene.

In above formula (III), examples of the halogen atom of R⁶ include fluorine, chlorine, bromine and iodine atoms. Examples of the alkoxy group of 1 to 4 carbon atoms include methoxy, ethoxy, n-propoxy and n-butoxy groups. Of these, R⁶ is preferably a chlorine atom, a hydroxyl group, a methoxy group or an ethoxy group.

Specific examples of silane compounds represented by above formula (III) include methoxysilane, dimethylmethoxysilane, ethoxysilane, dimethylethoxysilane, chlorosilane, dimethylchlorosilane and dimethylhydroxysilane.

A specific example of the disiloxane compound of above formula (IV) is 1,1,3,3-tetramethyldisiloxane.

In the step of obtaining an SiH group-containing organopolysiloxane by a hydrolytic condensation reaction between an organopolysiloxane of above formula (I') and a silane compound of above formula (III), the hydrolytic condensation reaction conditions are not particularly limited, although the reaction may be carried out under similar conditions as in the preparation of the organopolysiloxane of above formula (I').

In this case, although the ratio in which the organopolysiloxane of formula (I') and the silane compound of formula (III) are used is not particularly limited, it is preferable to use from 5 to 80 parts by weight, and more preferable to use from 10 to 70 parts by weight, of the silane compound of formula (III) per 100 parts by weight of the organopolysiloxane of formula (I').

When using a hydrolysis catalyst, the amount of use is not particularly limited, although from 0.0002 to 0.5 mole of the catalyst per mole of the silane compound of formula (III) is preferred.

The weight ratio between the hydrolyzable groups included in the organopolysiloxane of formula (I') and the water required in the hydrolytic condensation reaction is not particularly limited. However, because the rate of conversion can be changed by the amount of water added, a weight ratio that corresponds to the desired rate of conversion is preferred. To lower the amount of highly active alkoxy groups at the ends of the organopolysiloxane and ensure shelf stability, the alkoxy group rate of conversion is preferably from 50 to 100%, and more preferably from 60 to 100%.

In the step of obtaining a SiH group-containing organopolysiloxane by an equilibration reaction (siloxane bond cleavage/recombination reaction) between the organopolysiloxane of above formula (I') and the disiloxane compound of above formula (IV) using an acid catalyst, although the equilibration reaction conditions are not particularly limited, the reaction may be carried out at between 20°C and 150°C for a period of from about 0.5 hour to about 6 hours, and is preferably carried out at between 20°C and 100°C for a period of from about 1 hour to about 4 hours.

At this time, a solvent may be added where necessary. Examples of the solvent include alcohol solvents such as methanol, ethanol and isopropyl alcohol; and aromatic aprotic solvents such as benzene, toluene and xylene.

The ratio between the amounts in which the organopolysiloxane of formula (I') and the disiloxane compound of formula (IV) are used is not particularly limited, although the amount of disiloxane compound of formula (IV) is preferably from 10 to 70 parts by weight, and more preferably from 20 to 60 parts by weight, per 100 parts by weight of the organopolysiloxane of formula (I').

The acidic catalyst for promoting the equilibration reaction is preferably a strong acid. The type is of no particular concern, although suitable use can be made of, for example, sulfuric acid, methanesulfonic acid or trifluoromethanesulfonic acid. In terms of the ease of the work-up, a cation exchange resin having these exchange groups is especially preferred.

The amount of acidic catalyst added is preferably from 100 to 10,000 ppm, and more preferably from 500 to 3,000 ppm, with respect to the combined weight of the organopolysiloxane of formula (I') and the disiloxane compound of formula (IV).

During the equilibration reaction, water may be added to promote a hydrolytic condensation reaction between the organopolysiloxane of formula (I') and the disiloxane compound of formula (IV). Although the amount of water added is not particularly limited, because the rate of conversion can be changed by the amount of water added, a weight ratio that corresponds to the desired rate of conversion is preferred. To lower the amount of highly active alkoxy groups at the ends of the organopolysiloxane and ensure shelf stability, the alkoxy group rate of conversion is preferably from 50 to 100%, and more preferably from 60 to 100%.

### <Step (β)>

Step (β) is the step of obtaining a hydroxyl group-containing organopolysiloxane by effecting a hydrosilylation reaction between the SiH group-containing organopolysiloxane obtained in Step (α) and a compound of above formula (V).

In formula (V), the monovalent aliphatic unsaturated hydrocarbon group of 2 to 8 carbon atoms represented by R⁷ is preferably one having from 2 to 6 carbon atoms. Specific examples include alkenyl groups such as vinyl, allyl, 3-butenyl, 5-hexenyl and 7-octenyl groups. Vinyl and allyl groups are preferred; an allyl group is more preferred.

Taking into account the compatibility with the organopolysiloxane, the compound of above formula (V) is preferably vinyl alcohol, allyl alcohol or ethylene glycol monoallyl ether, and is more preferably ethylene glycol allyl ether.

The amount of the compound of formula (V) furnished to the hydrosilylation reaction is preferably one mole or more per mole of SiH groups in the SiH group-containing organopolysiloxane obtained in Step (α).

The hydrosilylation reaction is preferably carried out in the presence of a catalyst. Compounds containing a platinum group metal such as platinum, rhodium or palladium may be used as the hydrosilylation reaction catalyst. Of these, platinum-containing compounds are preferred. Examples include platinum black, chloroplatinic acid, alcohol-modified chloroplatinic acid, complexes of chloroplatinic acid with an olefin, vinyl siloxane, acetylene alcohol or the like, platinum carbonyl vinylmethyl complexes, platinum divinyltetramethyldisiloxane complexes, platinum cyclovinyl-methylsiloxane complexes and platinum-octyl aldehyde/octanol complexes.

The amount of addition should be a so-called catalytic amount that can promote the addition reaction, this typically being, based on the weight of the platinum group metal, from 0.1 to 500 ppm, preferably from 1 to 200 ppm, with respect to the weight of the compound of above formula (V).

The hydrosilylation reaction conditions, although not particularly limited, are preferably a reaction temperature of between 20°C and 120°C and a reaction time of from 1 to 8 hours, and more preferably a reaction temperature of between 20°C and 100°C and a reaction time of from 1 to 6 hours.

Component (C) has a polystyrene-equivalent weight-average molecular weight (Mw) according to gel permeation chromatography (GPC) which is preferably from 1,000 to 500,000, and more preferably from 1,500 to 10,000. At a weight-average molecular weight of 1,000 or more, the shelf stability and flex resistance are better; at 500,000 or less, there is no risk of surface irregularities or uneven coating arising during application.

With regard to the GPC measurement conditions, the method used in, for example, the subsequent "Examples" section may be employed.

Component (C) has a kinematic viscosity at 25°C which is preferably from 5 to 2,000 mm²/s, and more preferably from 20 to 1,000 mm²/s. At 5 mm²/s or more, the shelf stability and flex resistance are even better; at 2,000 mm²/s or less, there is no risk of surface irregularities or uneven coating arising during application. The kinematic viscosity can be measured using, for example, a Cannon-Fenske viscometer.

Component (C) has an amount of alkoxy groups thereon which, from the standpoint of shelf stability and adhesion to the substrate, is preferably from 0.5 to 10 wt% with respect to the organopolysiloxane.

The amount of hydroxyl groups included in Component (C) is not particularly limited. However, from the standpoint of the viscosity of component (C) and also the crosslink density, chemical resistance, stain resistance and weather resistance of the resulting cured film, the hydroxyl number is preferably from 50 to 500 mg KOH/g, and more preferably from 70 to 300 mg KOH/g.

The component (C) content, expressed in terms of the weight of nonvolatile matter per 100 parts by weight of nonvolatile matter in component (A), is from 5 to 500 parts by weight, preferably from 5 to 100 parts by weight, and more preferably from 5 to 50 parts by weight. At an amount of component (C) that is lower than this range, the weather resistance and stain resistance of the resulting cured film are inadequate; on the other hand, at an amount that is too high, the chemical resistance, hardness and weather resistance are inadequate.

Component (C) may be one compound having a single composition or may be a mixture of a plurality of compounds of differing compositions.

### (4) Component (D): Curing Catalyst

The coating composition of the invention may include a curing catalyst. The curing catalyst is not particularly limited, provided that it is one commonly used in organosiloxane coatings, although an organometallic compound is preferred. Exemplary organometallic compounds include metal alkoxide compounds, metal chelate compounds and metal ester compounds of metals such as Ti, Al, Zr or Sn. One that includes an organotin compound is preferred.

Specific examples of metal alkoxide compounds include aluminum alkoxides such as aluminum trimethoxide, aluminum triethoxide, aluminum tri-n-propoxide, aluminum triisopropoxide, aluminum tri-n-butoxide, aluminum triisobutoxide, aluminum tri-s-butoxide and aluminum tri-t-butoxide; titanium alkoxides such as tetramethyl titanate, tetraethyl titanate, tetra-n-propyl titanate, tetraisopropyl titanate, tetra-n-butyl titanate, tetraisobutyl titanate, tetra-t-butyl titanate, tetra-n-hexyl titanate, tetraisooctyl titanate and tetra-n-lauryl titanate; zirconium alkoxides such as tetraethyl zirconate, tetra-n-propyl zirconate, tetraisopropyl zirconate, tetra-n-butyl zirconate, tetra-s-butyl zirconate, tetra-t-butyl zirconate, tetra-n-pentyl zirconate, tetra-t-pentyl zirconate, tetra-t-hexyl zirconate, tetra-n-heptyl zirconate, tetra-n-octyl zirconate and tetra-n-stearyl zirconate; and dibutyltin dibutoxide.

Specific examples of metal chelate compounds include aluminum chelate compounds such as tris(ethyl acetoacetate)aluminum, tris(n-propyl acetoacetate)aluminum, tris(isopropyl acetoacetate)aluminum, tris(n-butyl acetoacetate)aluminum, isopropoxybis(ethyl acetoacetate)aluminum, tris(acetylacetonate)aluminum, tris(propionylacetonate)aluminum, diisopropoxypropionylacetonatealuminum, acetylacetonate bis(propionylacetonate)aluminum, monoethylacetoacetate bis(acetylacetonate)aluminum, acetylacetonatealuminum di-s-butyrate, methylacetoacetatealuminum di-s-butyrate, di(methylacetoacetate)aluminum mono-tert-butyrate, diisopropoxyethylacetoacetatealuminum and monoacetylacetonate bis(ethylacetoacetate)aluminum; titanium chelate compounds such as diisopropoxy bis(ethylacetoacetate)titanate, diisopropoxy bis(acetylacetonate)titanate and di-n-butoxy bis(acetylacetonate)titanate; zirconium chelate compounds such as tetrakis(acetylacetonate)zirconium, tetrakis(n-propylacetoacetate)zirconium and tetrakis(ethylacetoacetate)zirconium; and tin chelate compounds, including tin ester compounds such as dibutyltin diacetate, dibutyltin di(2-ethylhexylate), dibenzyltin di(2-ethylhexylate), dibutyltin dilaurate, dibutyltin diisooctyl maleate and dibutyltin bis(acetylacetonate). Using a tin chelate compound is suitable from the standpoint of the chemical resistance of the film to be formed.

A commercial product may be used as the tin ester compound. Examples include Neostann U-100, U-130, N-200, U-220H, U-303, U-700, U-810, U-820 and U-830 (all from Nitto Kasei Co., Ltd.), and BT-120S (from Kaneka Corporation).

When Component (D) is included, the content thereof should be an amount sufficient to cure the composition. Generally, from 0.01 to 20 parts by weight per 100 parts by weight of nonvolatile matter in Component (A) is preferred; from 0.1 to 10 parts by weight is more preferred.

The curing catalyst of component (D) may be a single catalyst used alone, or two or more may be used in combination.

### (5) Optional Ingredients

The coating composition of the invention may suitably include optional additives within ranges that do not detract from the advantageous effects of the invention.

Specific examples of the additives include solvents, non-reactive silicone oils, reactive silicone oils, adhesion promoters such as silane coupling agents, non-reactive polymer resins, fillers, leveling agents, rheology modifiers, reactive diluents, non-reactive diluents, surfactants, dispersants, antifoaming agents, dehydrating agents, antidegradants, antioxidants, antistatic agents, infrared absorbers, ultraviolet absorbers, light stabilizers, fluorescent agents, dyes, pigments, fragrances, abrasives, rust inhibitors and thixotropic agents.

Each of these may be of one type used alone, or may be of two more types used in combination.

Examples of solvents include aromatic hydrocarbons such as benzene, toluene and xylene; aliphatic hydrocarbons such as pentane, hexane, heptane and decane; ethers such as diethyl ether and tetrahydrofuran; esters such as ethyl acetate and butyl acetate; and ketones such as acetone, methyl ethyl ketone and methyl isobutyl ketone. One of these may be used alone or two or more may be used in combination.

In cases where the coating composition of the invention includes a solvent, the content thereof per 100 parts by weight of total nonvolatile matter in Components (A) to (C) is preferably from 1 to 50 parts by weight, and more preferably from 5 to 20 parts by weight.

Examples of pigments include colored pigments such as titanium oxide, red iron oxide, cyanine-based colored pigments, carbon black and zirconia powder; extender pigments such as silica, baryta powder, precipitated barium sulfate, barium carbonate, calcium carbonate, gypsum, clay, white carbon, diatomaceous earth, talc, magnesium carbonate, alumina white, gloss white and calcium carbonate; zinc phosphate, zinc phosphosilicate, aluminum zinc phosphate, calcium zinc phosphate, calcium phosphate, aluminum pyrophosphate, calcium pyrophosphate, aluminum dihydrogen tripolyphosphate, aluminum metaphosphate, calcium metaphosphate, zinc oxide, zinc phosphomolybdate, aluminum phosphomolybdate, zinc, zinc oxide, zinc molybdate, calcium molybdate, boric acid salts, barium metaborate, zinc calcium cyanamide, calcium silicate and calcium metasilicate; and anti-corrosive pigments such as modified silicas in which cations such as calcium, zinc, cobalt, lead, strontium or barium are bonded to porous silica particles, ion-exchange silicas obtained by bonding cations via ion exchange, aluminum pyrophosphate, vanadium pentoxide, calcium vanadate and ammonium metavanadate. One of these may be used alone or two or more may be used in combination.

When the coating composition of the invention includes a pigment, from the standpoint of the weather resistance of the film to be formed, the pigment content in terms of the weight of nonvolatile matter therein per 100 parts by weight of the total nonvolatile matter in Components (A) to (C) is preferably from 5 to 100 parts by weight, and more preferably from 30 to 90 parts by weight.

### (6) Method of Preparation

The coating composition of the invention can be obtained by mixing together and stirring in any order above component (A), component (B), component (C), component (D) where necessary, and optional ingredients. The mixing conditions are not particularly limited, although taking into consideration the workability and the coating composition stability, mixture at between 10°C and 40°C is preferred.

The viscosity of the inventive coating composition is not particularly limited. However, to facilitate molding or coating operations and suppress the occurrence of streaks and other imperfections, the viscosity at 25°C, as measured with a rotational viscometer, is preferably 100,000 mPa·s or less, and more preferably 20,000 mPa·s or less. Although the viscosity has no particular lower limit, it is preferably 10 mPa·s or more.

### (7) Cured Film of Coating Composition, and Coated Article

A cured film and a coated article can be obtained by applying the coating composition of the invention onto a substrate, and curing the applied composition.

The method of application is not particularly limited. For example, a known technique such as spray coating, roller coating, brush coating or curtain coating may be employed.

The coating composition of the invention is curable at room temperature, although heating may be carried out if necessary to accelerate curing.

The heating temperature is preferably between 40°C and 150°C. The cured film that forms as a result is able to exhibit excellent weather resistance, chemical resistance and stain resistance.

The substrate is exemplified by glass; metal materials which, if desired, have been surface-prepared, such as steel sheet, galvanized steel sheet, stainless steel or aluminum, substrates having alkalinity, such as concrete, mortar, slate or slate roof tiles, ceramic building materials, plastics, and any of these having an old coat formed thereon.

Uses for the coating composition of the invention include, without particular limitation, heavy-duty anti-corrosion coating applications for steel structures such as bridges, transmission towers, industrial plants and tanks.

The coating composition of the invention has an excellent long-term weather resistance and, with this composition alone, gives a cured film that protects the substrate from a harsh environment and maintains an attractive appearance. However, where necessary, known layers obtained by priming and/or intermediate coating may be provided.

Examples of such prime coatings include epoxy resin coatings, modified epoxy resin coatings, epoxy resin-based glass flake coatings, epoxy resin covering materials, ultra-thick film-forming epoxy resin coatings, epoxy resin zinc-rich paints, inorganic zinc-rich paints, chlorinated rubber resin-based coatings, phthalic acid resin-based coatings and epoxy ester resin coatings. Examples of coatings for intermediate coating include epoxy resin-based coatings, polyurethane-based coatings, epoxy resin MIO coatings, phenolic resin-based MIO coatings, chlorinated rubber resin-based coatings and phthalic acid resin-based coatings.

### EXAMPLES

Synthesis Examples, Examples of the invention and Comparative Examples are given below by way of illustration, although the invention is not limited by these Examples. The dynamic viscosity is a value measured at 25°C using a Cannon-Fenske viscometer. The hydroxyl number is a value measured by neutralization titration in general accordance with JIS K 1557-1: 2007. The isocyanate content is the amount of isocyanate groups present in a sample, expressed as a weight fraction, in general accordance with JIS K 1603-1: 2007. The average composition of an organopolysiloxane is the value computed from integrated values in ¹H-NMR and ²⁹Si-NMR spectra obtained using an NMR spectrometer from JEOL, Ltd. The weight-average molecular weight (Mw) is a polystyrene-equivalent value determined by gel permeation chromatographic (GPC) measurement under the following conditions.

### [GPC Conditions]

| | |
|---|---|
| Apparatus: | HLC-8220 GPC (Tosoh Corporation) |
| Columns: | TSKgel GMHXL-L, TSKgel G4000HXL, TSKgel G2000HXL (two) |
| Developing solvent: | tetrahydrofuran (THF) |
| Flow rate: | 1 mL/min |
| Detector: | RI |
| Column thermostatic chamber temperature: | 40°C |
| Reference material: | polystyrene |

### [1] Synthesis of Hydroxyl Group-Containing Organopolysiloxanes

Hydroxyl group-containing organopolysiloxanes were prepared using the following organopolysiloxanes as the starting materials.

### <Starting Organopolysiloxanes>

| | |
|---|---|
| Organopolysiloxane 1: | An organopolysiloxane of above formula (I') in which a = 0, b = 0.6, c = 0.4, d = 0, g = 1.1, R¹ represents methyl and phenyl groups, and R² represents a methyl group (weight-average molecular weight, 1,500; kinematic viscosity, 100 mm²/s) |
| Organopolysiloxane 2: | An organopolysiloxane of formula (I') in which a = 0, b = 0.9, c = 0.1, d = 0, g = 1.3, R¹ represents methyl and phenyl groups, and R² represents a methyl group (weight-average molecular weight, 1,800; kinematic viscosity, 70 mm²/s) |

### [Synthesis Example 1-1]

A 500 mL separable flask equipped with a stirrer, a reflux condenser, a dropping funnel and a thermometer was charged with 100 parts by weight of Organopolysiloxane A, 55 parts by weight of tetramethyldisiloxane, 35 parts by weight of methanol and 2 parts by weight of a strongly acidic cation exchange resin (Lewatit K 2629, from Lanxess AG), and 11 parts by weight of water was added dropwise under stirring. After 3 hours of stirring at 25°C, filtration of the resulting reaction mixture was carried out. Next, the fraction obtained by vacuum distillation (90°C, 1.3 kPa) was discarded. The rate of conversion of Si-OCH₃ groups computed from the integrated values for the detection spectra in ¹H-NMR and ²⁹Si-NMR was 80%.

To this was added 0.1 part by weight of a 1,3-divinyltetramethyldisiloxane complex of Pt(0) and 64 parts by weight of ethylene glycol monoallyl ether and 4 hours of heating at 80°C was carried out, following which unreacted ethylene glycol monoallyl ether was removed by vacuum distillation (90°C, 1.3 kPa), giving a hydroxyl group-containing organopolysiloxane (C-1) (yield, 150 parts by weight).

### [Synthesis Example 1-2]

Aside from changing the starting material from Organopolysiloxane 1 to Organopolysiloxane 2, a hydroxyl group-containing organopolysiloxane (C-2) was prepared in the same way as in Synthesis Example 1-1.

The values of e and f in formula (I), and the weight-average molecular weights and hydroxyl values of the resulting organopolysiloxanes are given in Table 1.

**[Table 1]**

| Hydroxyl group-containing organopolysiloxane | e | f | Mw | Hydroxyl number (mgKOH/g) |
|---|---|---|---|---|
| (C-1) | 0.4 | 0.7 | 2,500 | 130 |
| (C-2) | 0.3 | 1 | 3,300 | 200 |

### [2] Preparation of Coating Compositions

### [Examples 1-1 to 1-8, Comparative Examples 1-1 to 1-4]

The ingredients shown below were mixed together at 25°C in the proportions (weight ratios) shown in Table 2, thereby preparing Curable Compositions (i) to (xii).

### <Component (A)>

(A-1): Acrydic A-801P (a toluene-butyl acetate solution of acrylic polyol; nonvolatile content, 50 wt%; hydroxyl value, 50 mg KOH/g; from DIC Corporation)
(A-2): Burnock D-220 (a polyester polyol; nonvolatile content, 100 wt%; hydroxyl value, 147 mg KOH/g; from DIC Corporation)

### <Component (B)>

(B-1): Burnock DN-901S (a polyisocyanate; nonvolatile content, 100 wt%; isocyanate content, 23.1 wt%; from DIC Corporation)
(B-2): Duranate TPA-100 (a polyisocyanate; nonvolatile content, 100 wt%; isocyanate content, 23.2 wt%; from Asahi Kasei Corporation)

### <Component (C)>

(C-1): The hydroxyl group-containing organopolysiloxane obtained in Synthesis Example 1-1 above
(C-2): The hydroxyl group-containing organopolysiloxane obtained in Synthesis Example 1-2 above

### <Component (D)>

(D): Neostann U-810 (dioctyltin, from Nitto Kasei Co., Ltd.)

### <Component (E)>

(E): Ethyl acetate/butyl acetate mixed solvent (weight ratio, 1:1)

**[Table 2]**

| Formulation (pbw) | Example | | | | | | | | Comparative Example | | | |
|---|---|---|---|---|---|---|---|---|---|---|---|---|
| | 1-1 | 1-2 | 1-3 | 1-4 | 1-5 | 1-6 | 1-7 | 1-8 | 1-1 | 1-2 | 1-3 | 1-4 |
| Curable composition | (i) | (ii) | (iii) | (iv) | (v) | (vi) | (vii) | (viii) | (ix) | (x) | (xi) | (xii) |
| (A-1) | 100 | 100 | 100 | | 100 | 100 | 100 | 100 | 100 | 100 | 100 | 100 |
| (A-2) | | | | 100 | | | | | | | | |
| (B-1) | 20.5 | 18.3 | 58.4 | 52.0 | | 22.8 | 13.4 | 23.1 | 16.2 | 16.6 | 11.5 | 25.7 |
| (B-2) | | | | | 18.3 | | | | | | | |
| (C-1) | 10 | 5 | 100 | 10 | 10 | | 10 | 10 | | 0.4 | 10 | 10 |
| (C-2) | | | | | | 10 | | | | | | |
| (D) | 0.2 | 0.2 | 0.2 | 0.2 | 0.2 | 0.2 | 0.2 | 0.2 | 0.2 | 0.2 | 0.2 | 0.2 |
| (E) | 10 | 10 | 10 | 10 | 10 | 10 | 10 | 10 | 10 | 10 | 10 | 10 |
| NCO_{(B)}/OH_{(A+C)} | 1.0 | 1.0 | 1.0 | 1.0 | 1.0 | 1.0 | 0.8 | 1.4 | 1.0 | 1.0 | 0.7 | 1.6 |

### [3] Production and Evaluation of Coated Articles

### [Examples 2-1 to 2-8, Comparative Examples 2-1 to 2-4]

Coating compositions (i) to (xii) obtained in Examples 1-1 to 1-8 and Comparative Examples 1-1 to 1-4 were applied onto a metal substrate in each case with a flow coater to a dry film thickness of 30 µm and cured for 7 days under 23°C, 50% RH conditions, giving a coat.

Coat appearance, rubbing test, stain resistance test and accelerated weathering test evaluations were carried out on the resulting coated articles. The results are shown in Table 3.

### (1) Coat Appearance

A coat that, on visual inspection, had a uniform surface and was free of unevenness due to agglomerates and free of cracks was rated as "○"; a coat that had a nonuniform surface and in which clouding, unevenness due to agglomerates or cracks arose was rated as "×".

### (2) Rubbing Test

A Bemcot M-311 wipe (surface area, 4 cm²; Asahi Kasei Corporation) was wetted with acetone and then rubbed back-and-forth 30 times over the surface under a load of 500 gf, following which the appearance of the coat was visually evaluated. Coats in which no change in appearance was observed following the rubbing test as compared with before the test were rated as "○"; those in which peeling or clouding of the coat was observed were rated as "×".

### (3) Stain Resistance Test

A line was drawn on a test surface with an oil-based marker (an organic solvent-based marker pen available under the trade name Mckee Superfine from Zebra Co., Ltd.) and left to stand for 3 hours, following which evaluation was carried out to determine whether the line can be wiped off with a Bemcot M-311 wipe (surface area, 4 cm²; Asahi Kasei Corporation) wetted with an ethanol/toluene (weight ratio, 1:1) mixed solvent. The amount of ink remaining on the coat following test completion was visually observed and rated as follows.
○: No major change observable compared with untreated test specimen.
×: Ink remains compared with untreated test specimen.

### (4) Accelerated Weathering Test

An accelerated weathering test was carried out using a super-accelerated weathering tester (EYE Super UV Tester, from Iwasaki Electric Co., Ltd.). A polyester-coated steel sheet (0.8 mm × 70 mm × 60 mm) as the test specimen was subjected to a 30-cycle test, each cycle consisting of 8 hours of irradiation (ultraviolet irradiance, 90 mW; black panel temperature, 63°C; 70% RH), 4 hours of darkness (black panel temperature, 63°C; 70% RH) and 4 hours of condensation (black panel temperature, 30°C; 90%RH). Following test completion, the coat was visually examined for swelling, cracking, peeling and change in gloss, and was evaluated as follows.
○: No major changes observable compared with untreated test specimen.
×: Loss of gloss, cracking or peeling is evident compared with untreated test specimen.

**[Table 3]**

| | Example | | | | | | | | Comparative Example | | | |
|---|---|---|---|---|---|---|---|---|---|---|---|---|
| | 2-1 | 2-2 | 2-3 | 2-4 | 2-5 | 2-6 | 2-7 | 2-8 | 2-1 | 2-2 | 2-3 | 2-4 |
| Curable composition | (i) | (ii) | (iii) | (iv) | (v) | (vi) | (vii) | (viii) | (ix) | (x) | (xi) | (xii) |
| Coat appearance | ○ | ○ | ○ | ○ | ○ | ○ | ○ | ○ | ○ | ○ | ○ | × |
| Rubbing test | ○ | ○ | ○ | ○ | ○ | ○ | ○ | ○ | ○ | ○ | × | ○ |
| Stain resistance test | ○ | ○ | ○ | ○ | ○ | ○ | ○ | ○ | × | × | ○ | × |
| Accelerated weathering test | ○ | ○ | ○ | ○ | ○ | ○ | ○ | ○ | × | × | × | × |

As shown in Table 2, the cured films obtained in Examples 2-1 to 2-8 had an excellent appearance and solvent resistance, in addition to which the stain resistance and weather resistance were also excellent.

On the other hand, the cured films obtained from a curable composition containing no component (C) and a curable composition containing an insufficient amount of component (C) (Comparative Examples 2-1 and 2-2) each had an excellent appearance and solvent resistance, but did not exhibit the stain resistance and weather resistance that are features of silicone. In the cured film of Comparative Example 2-3 in which the ratio NCO/OH was smaller than 0.8, crosslinking was inadequate and so the solvent resistance and weather resistance were poor. In the cured film of Comparative Example 2-4 in which the ratio NCO/OH was greater than 1.4, some clouding of the appearance was observed and the stain resistance and weatherability were poor.

## Claims

1. A coating composition comprising:
(A) one, two or more polyols selected from the group consisting of acrylic polyols, polyester polyols and polyether polyols,
(B) a compound having two or more isocyanate groups per molecule, and
(C) from 5 to 500 parts by weight of a hydroxyl group-containing organopolysiloxane of formula (I) below per 100 parts by weight of component (A)
[Chem. 1]
(SiO_{4/2})ₐ(R¹SiO_{3/2})_{b}(R¹₂SiO_{2/2})_{c}(R¹₃SiO_{1/2})_{d}(R²O_{1/2})ₑ(R³O_{1/2})_{f} (I)
(wherein each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; R² is a hydrogen atom, methyl group, ethyl group, n-propyl group or isopropyl group; R³ is a group of formula (II) below 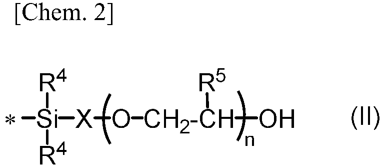
(wherein each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; each R⁵ is independently a hydrogen atom or a monovalent saturated hydrocarbon group of 1 to 8 carbon atoms; X is a divalent hydrocarbon group of 2 to 8 carbon atoms; n is a number from 0 to 400; and * represents a bond with an oxygen atom); a, b, c and d are numbers which respectively satisfy the conditions 0 ≤ a < 1,0 < b ≤ 1, 0 ≤ c ≤ 0.5, 0 ≤ d < 1 and a+b+c+d = 1; and e and f are numbers which respectively satisfy the conditions 0 ≤ e ≤ 1, 0 < f < 4 and 0 < e+f < 4),
wherein the ratio (NCO_{(B)}/OH_{(A+C)}) of the number of isocyanate groups in component (B) to the sum of the number of hydroxyl groups in component (A) and the number of hydroxyl groups in component (C) is from 0.8 to 1.4.

2. The coating composition of claim 1, wherein component (A) is an acrylic polyol, a polyester polyol, or both of these.

3. The coating composition of claim 1 or 2, wherein component (B) is a polyisocyanate which has two or more isocyanate groups per molecule and has no silicon atoms.

4. The coating composition of any one of claims 1 to 3, wherein at least one occurrence of R¹ in formula (I) is an aryl group having from 6 to 18 carbon atoms.

5. The coating composition of any one of claims 1 to 4, wherein each R¹ in formula (I) is independently a methyl group or a phenyl group.

6. The coating composition of any one of claims 1 to 5, wherein R² in formula (I) is a methyl group.

7. The coating composition of any one of claims 1 to 6, wherein b in formula (I) is a number which satisfies the condition 0.5 ≤ b ≤ 1.

8. The coating composition of any one of claims 1 to 7, wherein a and d in formula (I) are 0.

9. The coating composition of any one of claims 1 to 8, wherein R⁴ in formula (II) is a methyl group, R⁵ is a hydrogen atom, X is an alkylene group of 3 carbon atoms and n is 1.

10. The coating composition of any one of claims 1 to 9, wherein component (C) has a polystyrene-equivalent weight-average molecular weight (Mw) in gel permeation chromatography which is from 1,000 to 500,000.

11. The coating composition of any one of claims 1 to 10, further comprising (D) a curing catalyst.

12. A method for preparing the coating composition of any one of claims 1 to 11, comprising the step of mixing together components (A) to (C) at between 10°C and 40°C.

13. A cured film of the coating composition of any one of claims 1 to 11.

14. A coated article comprising a substrate and the cured film of claim 13 formed, either directly or over one or more other layer, on at least one surface of the substrate.
